# NOUVEAU FASCICULE DE BREVET EUROPEEN

(11) **EP 1 072 763 B2**
(45) Date de publication et mention de la décision concernant l'opposition: **25.03.2009**
(45) Mention de la délivrance du brevet: 10.12.2003
(21) Numéro de dépôt: 00402153.1
(22) Date de dépôt: 27.07.2000
(51) Int. Cl.: F01N 3/08, F01N 3/20, F01N 3/027

(54) **Système et procédé de traitement des particules et des oxydes d'azote pour un moteur à combustion**
Vorrichtung und Verfahren zur Behandlung von Partikeln und Stickoxyden für eine Brennkraftmaschine
System and method of treating particles and nitrogen oxydes for an internal combustion engine

(30) Priorité: 28.07.1999 FR 9909777
(43) Date de publication de la demande: 31.01.2001
(73) Titulaire: RENAULT S.A.S., 92100 Boulogne Billancourt (FR)
(72) Inventeur: Lunati, Sabine, 92000 Nanterre (FR)
(74) Mandataire: Kohn, Philippe

(56) Documents cités:
- EP-A- 0 758 713
- EP-A- 0 828 063
- EP-A- 0 862 941
- EP-A- 0 894 950
- EP-A- 1 060 004
- JP-A- 07 119 444
- PATENT ABSTRACTS OF JAPAN vol. 1997, no. 04, 30 avril 1997 (1997-04-30) & JP 08 338229 A (TOYOTA MOTOR CORP), 24 décembre 1996 (1996-12-24)
- PATENT ABSTRACTS OF JAPAN vol. 018, no. 491 (M-1672), 13 septembre 1994 (1994-09-13) & JP 06 159037 A (TOYOTA MOTOR CORP), 7 juin 1994 (1994-06-07)

## Description

L'invention concerne un procédé de traitement des gaz d'échappement d'un moteur à combustion.

L'invention concerne plus particulièrement un procédé de traitement des gaz d'échappement d'un moteur à combustion, notamment d'un moteur diesel ou d'un moteur à essence à mélange pauvre, du type comportant un piège à NOx en amont d'un filtre à particules-et un procédé de pilotage d'un tel système.

On connaît des exemples de systèmes de traitement des gaz d'échappement qui permettent de diminuer les émissions de substances polluantes tels que les oxydes d'azote et les particules.

Les moteurs diesels est certains moteurs à essence ( ou allumage commandé) fonctionnent avec des mélanges carburés pauvres, c'est-à-dire avec un excès d'oxygène.

La combustion des mélanges pauvres produit des oxydes d'azote ou NOx qu'il est nécessaire de traiter par conversion catalytique.

Pour réduire les NOx alors que les gaz d'échappement sont riches en oxygène, une méthode consiste à stocker les NOx contenus dans les gaz d'échappement dans un piège encore appelé NOxtrap et à traiter périodiquement les NOx ainsi piégés en injectant massivement des substances réductrices tel que du carburant. Le document EP-B-0.560.991 décrit un tel dispositif de stockage des NOx ainsi que différentes stratégies de régénération.

Les moteurs à combustion interne et en particulier les moteurs diesels produisent par ailleurs des particules ou suies constituées d'hydrocarbures imbrûlés insolubles.

Pour traiter ses particules une méthode similaire à celle du piège à NOx a été développée, elle consiste à utiliser un filtre à particules qui piège les suies émises par le moteur et à venir périodiquement détruire ces particules en les brûlant.

Cette phase de régénération des filtres est obtenue à partir de moyens de chauffage pilotés, ou bien encore en augmentant temporairement la température des gaz d'échappement au moyen de post-combustion.

« Le document JP8338229 enseigne un système de traitement des gaz d'échappement comprenant un filtre à particule et un catalyseur d'oxydation pouvant comprendre une imprégnation constituant un piège à NOX pour pourvoir oxyder les suies avec l'oxyde d'azote libéré par le piège à NOx. Cependant ce document ne prévoit pas d'imprégner le filtre à particule d'une phase catalytique pour diminuer la température de combustion des suies.

Le document JP 6159037 enseigne un système de traitement des gaz d'échappement comprenant un filtre à particule comprenant une imprégnation constituant un piège à NOx. De plus, ce document ne prévoit pas d'imprégner le filtre à particule d'une phase catalytique pour diminuer la température de combustion des suies. »

L'invention a plus particulièrement pour objet de mettre à profit l'enrichissement ponctuel des gaz d'échappement en oxydes d'azote, lors de la régénération du piège à NOx, pour favoriser la combustion des particules dans le filtre à particules à plus basse température grâce au pouvoir oxydant du NO₂ et ainsi de diminuer voire de supprimer le chauffage additionnel du filtre à particules.

L'invention propose ainsi procédé de pilotage d'un système de traitement selon la revendication 1.

Selon d'autres caractéristiques du procédé :
- lorsque la valeur du niveau de remplissage du piège à NOx atteint une première valeur maximum prédéterminée alors que la valeur du niveau de chargement du filtre à particules est inférieure à une seconde valeur minimum, une quantité suffisante d'agent réducteur est injectée pour régénérer au moins partiellement le piège à Nox ;
- le taux de recirculation des gaz d'échappement est augmenté ponctuellement pour réduire la quantité d'agent réducteur à injecter ;
- lorsque le niveau de chargement du filtre à particules atteint une seconde valeur maximum prédéterminée alors que la valeur du niveau de remplissage du piège à NOx est inférieure à une première valeur minimum, la régénération du filtre à particules est réalisée au moins partiellement sans que la régénération du piège à oxydes d'azote ne soit mise en oeuvre.

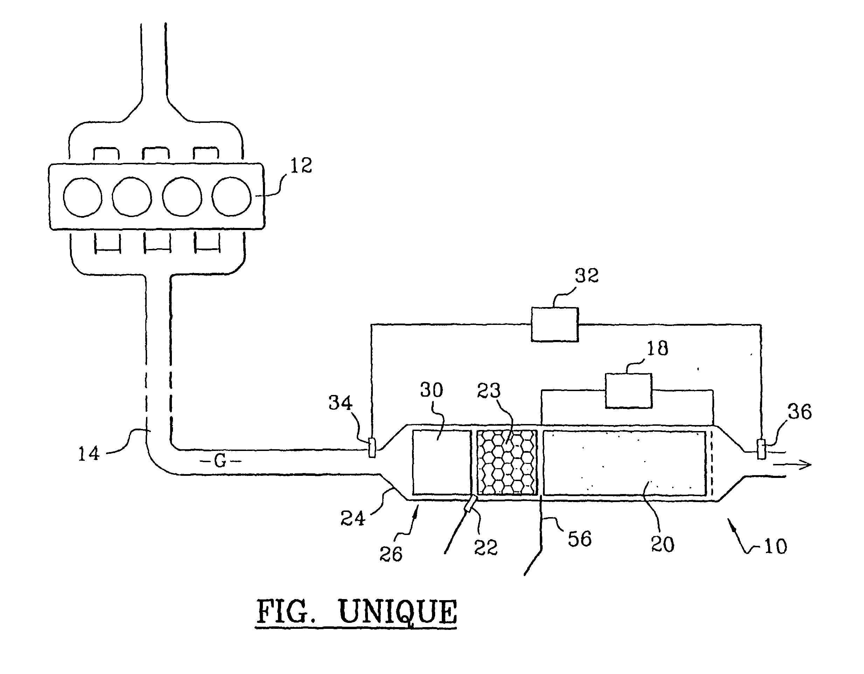

D'autres caractéristiques et avantages de l'invention apparaîtront à la lecture de la description détaillée qui suit pour la compréhension de laquelle on se reportera à la figure unique en annexe.

La figure unique est une représentation schématique d'une ligne d'échappement équipée d'un système de traitement des gaz d'échappement selon l'invention.

On a représenté sur la figure unique, un système de traitement 10 des gaz de d'échappement G d'un moteur à combustion 12. Le moteur 12 est un moteur diesel ou un moteur à essence fonctionnant en mélange pauvre tel qu'un moteur à essence à injection directe.

Une ligne 14 permet l'écoulement des gaz G du moteur vers l'atmosphère. Un système de traitement 10 destiné à purifier les gaz d'échappement G se situe à l'intérieur de la ligne 14. Il se compose principalement d'un piège à NOx 23 et d'un filtre à particules 20. Ces éléments sont placés successivement d'amont en aval dans la ligne 14 dans le sens d'écoulement des gaz G.

Avantageusement, un catalyseur d'oxydation 30 et un système d'injection 22 d'un agent réducteur sont placées en amont du piège à NOx 23.

L'agent réducteur utilisé est de préférence le carburant utilisé pour le fonctionnement du moteur tel que de l'essence, du fioul, de l'isooctane, etc.

Avantageusement, des moyens de chauffage 18 sont insérés en amont ou dans le filtre à particules 20.

Le catalyseur d'oxydation 30, le piège à NOx 23, le système d'injection 22, le filtre à particules 20 et le système de chauffage 18 sont placés dans une même enveloppe 24 ou dans plusieurs enveloppes distinctes.

Avantageusement le filtre à particules 20 est recouvert d'une imprégnation catalytique.

Avantageusement une sonde de pression 32 est reliée à deux prises de pression 34 et 36 placées respectivement en amont et en aval du filtre à particules 20.

Avantageusement, une sonde 56 à NOx mesure la concentration en NOx dans les gaz d'échappement G en aval du piège 23 à NOx.

Le fonctionnement du système de traitement 10 est le suivant.

Les gaz d'échappement G produits par le moteur 12 sont envoyés dans la ligne 14. Ils traversent successivement le catalyseur d'oxydation 30, le piège 23 à NOx et le filtre à particules 20.

Le catalyseur d'oxydation 30 à deux fonctions principales.

La première est l'oxydation des hydrocarbures imbrûlés à la sortie du moteur.

La seconde est l'oxydation du monoxyde d'azote en oxydes d'azote. Ce dernier est un oxydant très puissant au même titre que l'ozone.

Selon une variante (non représentée), le catalyseur d'oxydation 30 peut-être supprimé.

Selon une autre variante (non représentée) le moteur est équipé d'un circuit de recirculation des gaz d'échappement. L'air admis dans le moteur est usuellement de l'air frais provenant de l'atmosphère, la recirculation des gaz G permet de mélanger cet air frais avec des gaz d'échappement G. Cela a notamment pour effet de diminuer la concentration en oxygène dans les gaz d'échappement G.

Le piège 23 à NOx permet de stocker des NOx présents dans les gaz d'échappement lorsque la composition de ces derniers ne permet pas leur réduction.

Pour que le stockage des NOx soit possible, il faut être en milieu oxydant et il faut que le piège 23 ne soit pas saturé. Le principe de stockage des NOx est le suivant. Le NO préalablement oxydé en NO2 est stocké dans le piège 23 sous forme de nitrates. La phase de stockage n'est possible qu'en milieu oxydant.

Pour régénérer le piège 23 et libérer les NOx, il faut d'une part une température suffisante, et d'autre part se placer en condition réductrice, c'est-à-dire en milieu pauvre en oxygène. Ces conditions réductrices sont obtenues grâce à l'injection de carburant par le système d'injection 22 en entrée du piège 23 en quantité suffisante pour éliminer l'excès d'oxygène et régénérer le piège à NOx.

Conformément à l'invention, le piège 23 ne comporte pas ou peut de catalyseur de réduction, de sorte que lors de la phase de régénération les NOx libérés sont pas ou peut réduits. Le système de traitement 10 comporte donc en aval du filtre 20 des moyens catalytiques favorisant la réduction des NOx libérés du piège 23.

Selon une variante le système d'injection 22 est constitué des injecteurs du moteur 12.

La fréquence de déclenchement de la phase de régénération du piège 23 va dépendre de son niveau de remplissage ainsi que du niveau de chargement du filtre à particules 20 comme cela va être expliqué ci-après.

Le filtre à particules 20 piège les particules présentes dans les gaz d'échappement. Périodiquement il est nécessaire de régénérer le filtre 20 par combustion des suies piégées.

La régénération du filtre à particules 20 nécessite une température des gaz d'échappement supérieure ou égale à la température de combustion des particules. Il est nécessaire, dans certains cas, d'augmenter la température des gaz d'échappement ou de diminuer la température de combustion des particules pour favoriser la phase de régénération.

Deux types d'assistance peuvent être mises en oeuvre.

Une première assistance dite active est obtenue par le système de chauffage 18.

Elle est mise en oeuvre lorsque la température des gaz d'échappement G en amont du filtre à particules 20 est insuffisante, c'est à dire inférieure à 500°C pour permettre la régénération du filtre à particules 20.

Le système de chauffage 18 peut être, soit le filtre à particules 20 lui-même utilisée comme résistance électrique chauffante, soit un moyen de chauffage additionnel tel qu'une grille chauffante, un brûleur etc. placés en amont du filtre à particules 20. Dans la première configuration, c'est la chaleur dégagée par le filtre à particules 20 qui provoque la combustion des particules déposées dans celui-ci. Dans la seconde configuration se sont les gaz G chauffés qui produisent la combustion des particules.

Une seconde assistance dite passive est obtenue par régénération catalytique.

Le filtre à particules 20 est recouvert d'une imprégnation appelée phase catalytique qui permet d'abaisser la température de combustion des particules. À titre d'exemple, on peut envisager l'utilisation d'un catalyseur métallique supporté par le filtre. Le métal doit posséder des propriétés oxydantes (ex : Pt, Cu). Il doit être fortement dispersé sur la surface et très dilué c'est à dire que sa teneur en métal et que le diamètre des particules métalliques doivent être très faibles pour éviter le vieillissement de la phase catalytique par frittage des particules métalliques, sous l'effet de la température. Le support peut être de type oxyde (ex : Al₂O₃) et il doit favoriser le stockage et la mobilité de l'oxygène par épandage sur la surface, de façon à améliorer le contact entre les particules formant une source de carbone et l'agent oxydant (O₂).

Cette réaction est favorisée à plus basse température en présence d'un catalyseur. L'utilisation de l'assistance passive pour la régénération du filtre à 20 permet de diminuer l'apport d'énergie par chauffage, nécessaire pour atteindre la température de combustion des particules.

Avantageusement, le filtre à particules 20 est recouvert d'une imprégnation particulière qui permet d'assurer le stockage des NOx.

Cette imprégnation peut être assimilée à celle utilisée pour le piège 23 à NOx qui doit permettre le stockage des NOx en milieu oxydant et leur libération en milieu réducteur.

Le stockage des NOx sur le filtre à particules 20 assure un bon contact entre les NOx et les particules. Ce qui favorise la combustion de ces dernières pas oxydation.

Conformément à l'invention, la fréquence de mise en oeuvre de la phase de régénération du filtre à particules 20 dépend du niveau de chargement du filtre à particules 20 et du niveau de remplissage du piège à NOx 23.

Les prises de pression 34 et 36 de la sonde de pression 32 permettent de déterminer la valeur de la perte de charge entre l'entrée et la sortie du système de traitement 10 qui correspond au niveau de chargement du filtre 20.

Une sonde 56 à NOx permet de mesurer la quantité des NOx contenus dans les gaz d'échappement G à la sortie du piège 23 à NOx. La concentration en NOx mesurée par la sonde 56 correspond au niveau de remplissage du piège 23 à NOx.

Dans la configuration proposée (piège 23 à NOx, filtre à particules 20), l'efficacité du système 10 est optimisée si la régénération du filtre à particules 20 et du piège 23 à NOx se produisent simultanément ou avec un faible décalage dans le temps.

En effet, la régénération piège 23 à NOx libère une quantité importante de NO₂. Les NO₂ sont fortement oxydants, ils favorisent donc la combustion des particules à plus basse température, l'efficacité du système 10 est ainsi améliorée et la quantité d'énergie nécessaire à la mise en oeuvre des moyens de chauffage 18 est réduite.

Il est donc important de synchroniser dans la mesure du possible la régénération du filtre à particules 20 et celle du piège 23 à NOx et ce, pour optimiser l'efficacité globale du système 10.

Le piège 23 à NOx se caractérise notamment par une première valeur minimum et une première valeur maximum de remplissage qui correspondent aux valeurs limites de la plage dans laquelle la régénération du piège 23 à NOx doit être effectuée.

Ces premières valeurs minimum et maximum de remplissage sont avantageusement cartographiées suivant le point de fonctionnement du moteur.

Le filtre à particules 20 est notamment défini par une seconde valeur minimum et une seconde valeur maximum de son niveau de chargement. Ces valeurs correspondent respectivement à la valeur du niveau de chargement en dessous de laquelle la quantité de particules stockée dans le filtre 20 est trop faible pour que le filtre puisse être régénéré et à la valeur du niveau de chargement au-dessus de laquelle la perte de charge dans la ligne d'échappement 14 résultant du colmatage du filtre 20 est trop importante pour un bon fonctionnement du moteur.

Ces secondes valeurs minimum et maximum de chargement sont avantageusement cartographiées suivant le point de fonctionnement du moteur.

Les régénérations du filtre à particules 20 et du piège 23 à NOx sont effectuées conjointement lorsque la valeur du niveau de remplissage et la valeur du niveau de chargement sont comprises entre leurs valeurs minimum et maximum respectives, cela de façon à minimiser la surconsommation d'agent réducteur pour la régénération du piège 23 à NOx. Le piège 23 à NOx et le filtre à particules 20 sont donc dimensionnés pour que leurs phases respectives de régénération soient le plus possible synchronisées et aussi pour permettre d'optimiser l'efficacité du système de traitement.

Cependant, cela n'est pas toujours possible, les vitesses de colmatage du filtre à particules 20 et de remplissage du piège 23 à NOx variant selon le point de fonctionnement du moteur 12.

En effet, la valeur du niveau de remplissage du piège à NOx 23 peut être égale à la première valeur maximum alors que la valeur du niveau de chargement du filtre 20 est inférieure à la seconde valeur minimum. Il est alors possible de régénérer au moins partiellement le piège à NOx 23 en injectant la quantité suffisante d'agent réducteur sans toutefois déclencher la régénération du filtre à particules 20.

Avantageusement, il est possible d'augmenter ponctuellement le taux de recirculation des gaz d'échappement pour rendre la concentration en oxygène des gaz d'échappement plus favorable à la régénération du piège à NOx 23, ce qui permet de réduire la quantité d'agent réducteur injecter.

Il peut aussi arriver que la valeur du niveau de chargement du filtre à particules 20 atteigne la seconde valeur maximum alors que la valeur du niveau de remplissage du piège à NOx 23 est inférieure à la première valeur minimum. Dans ce cas, la régénération du filtre 20 est effectuée au moins partiellement sans que la régénération du piège 23 à NOx ne soit mise en oeuvre.

## Revendications

1. Procédé de pilotage d'un système de traitement (10) des gaz d'échappement (G) d'un moteur à combustion (12) notamment d'un moteur diesel ou d'un moteur à essence à mélange pauvre comprenant un piège (23) à oxydes d'azote (NOx) qui ne comporte peu ou pas de catalyseur de réduction, disposé en amont d'un filtre à particules (20)
**caractérisé en ce que**, lorsque la valeur du niveau de remplissage du piège (23) à oxydes d'azote (NOx) est comprise entre une première valeur minimum et une première valeur maximum prédéterminées et que la valeur du niveau de chargement du filtre à particules (20) est comprise entre une seconde valeur minimum et une seconde valeur maximum prédéterminées, les phases de régénération du piège (23) à oxyde d'azote (NOx) et du filtre à particules (20) sont opérées de façon simultanée de façon que la libération des oxydes d'azote (NOx) lors de la régénération du piège (23) favorise la combustion des particules, de manière à optimiser l'efficacité du système de traitement (10).

2. Procédé de pilotage d'un système de traitement (10) des gaz d'échappement (G) d'un moteur à combustion (12), selon la revendication 1 **caractérisée en ce que**, lorsque la valeur du niveau de remplissage du piège (23) à oxydes d'azote (NOx) atteint une première valeur maximum prédéterminée alors que la valeur du niveau de chargement du filtre à particules (20) est inférieure à une seconde valeur minimum, une quantité suffisante d'agent réducteur est injectée pour régénérer au moins partiellement le piège (23) à oxydes d'azote (NOx) sans que la régénération du filtre à particules ne soit mis en oeuvre.

3. Procédé de pilotage selon l'une des revendications 1 ou 2 **caractérisé en ce que** le taux de recirculation des gaz d'échappement (G) est augmenté ponctuellement pour réduire la quantité d'agent réducteur à injecter.

4. Procédé de pilotage d'un système de traitement (10) des gaz d'échappement (G) d'un moteur à combustion (12), selon l'une des revendications 1 à 3 **caractérisé en ce que,** lorsque le niveau de chargement du filtre à particules (20) atteint une seconde valeur maximum prédéterminée alors que la valeur du niveau de remplissage du piège (23) à oxydes d'azote (NOx) est inférieure à une première valeur minimum, la régénération du filtre à particules (20) est réalisée au moins partiellement sans que la régénération du piège (23) à oxydes d'azote (NOx) ne soit mise en oeuvre.

## Claims

1. A control method for a treatment system (10) for the exhaust gases (G) of a combustion engine (12), in particular a diesel engine or a lean mixture petrol-driven engine, comprising a trap (23) for nitrogen oxides (NOx) which does not comprise few or any reducing catalyst disposed upstream of a particle filter (20), **characterised in that**, when the value of the filling level of the nitrogen oxide (NOx) trap (23) is between a predetermined first minimum and first maximum value and the value of the charging level of the particle filter (20) is between a predetermined second minimum and second maximum value, the phases of regeneration of the nitrogen oxide (NOx) trap (23) and of the particle filter (20) are conducted simultaneously so that the untrapping of nitrogen oxides (NOx) during regeneration of the trap (23) contributes to the combustion of the particles in order to optimise the efficiency of the treatment system (10).

2. A control method for a treatment system (10) for the exhaust gases (G) of a combustion engine (12) as claimed in claim 1, **characterised in that**, when the value of the filling level of the nitrogen oxide (NOx) trap (23) reaches a first predetermined maximum value, while the value of the charging level of the particle filter (20) is below a second minimum value, a sufficient quantity of reducing agent is injected in order at least partially to regenerate the nitrogen oxide (NOx) trap (23) without the regeneration of the particle filter being implemented.

3. A control method as claimed in one of claims 1 or 2, **characterised in that** the recycling rate of the exhaust gases (G) is selectively increased in order to reduce the quantity of reducing agent to be injected.

4. A control method for a treatment system (10) for the exhaust gases (G) of a combustion engine (12) as claimed in one of claims 1 to 3, **characterised in that,** when the charging level of the particle filter (20) reaches a second predetermined maximum value, while the value of the filling level of the nitrogen oxide (NOx) trap (23) is below a first minimum value, the regeneration of the particle filter (20) takes place at least partially, without the regeneration of the nitrogen oxide (NOx) trap (23) being implemented.

## Patentansprüche

1. Verfahren zur Steuerung eines Systems (10) zur Behandlung von Abgasen (G) eines Verbrennungsmotors (12), insbesondere eines Dieselmotors oder eines Benzinmotors mit Magermix, der eine Falle (23) für Stickoxide (NOx) umfasst, die wenig oder keinen Reduktionskatalysator aufweist und vor einem Partikelfilter (20) liegt, **dadurch** charakterisiert, dass, wenn der Wert des Füllungsgrades der Falle (23) für Stickoxide (NOx) zwischen einem ersten vorbestimmten Mindestwert und einem ersten vorbestimmten Höchstwert liegt, und wenn der Wert des Verschmutzungsgrades des Partikelfilters (20) zwischen einem zweiten vorbestimmten Mindestwert und einem zweiten vorbestimmten Höchstwert liegt, die Regenerationsphasen der Falle (23) für Stickoxide (NOx) und des Partikelfilters (20) simultan durchgeführt werden, so dass die Freisetzung der Stickoxide (NOx) bei der Regenerierung der Falle (23) die Verbrennung der Partikel begünstigt, um das Behandlungssystem (10) zu optimieren.

2. Verfahren zur Steuerung eines Systems (10) zur Behandlung von Abgasen (G) eines Verbrennungsmotors (12) gemäß Anspruch 1, **dadurch gekennzeichnet, dass**, wenn der Wert des Füllungsgrades der Falle (23) für Stickoxide (NOx) einen ersten vorbestimmten Höchstwert erreicht, während der Wert des Verschmutzungsgrades des Partikelfilters (20) niedriger als ein zweiter Mindestwert ist, eine ausreichende Menge von Reduktionsmittel eingespritzt wird, um die Falle (23) für Stickoxide (NOx) zumindest teilweise zu regenerieren, ohne dass die Regenerierung des Partikelfilters durchgeführt wird.

3. Verfahren zur Steuerung gemäß einem der Ansprüche 1 oder 2, **dadurch gekennzeichnet, dass** der Rückführungsgrad der Abgase (G) punktuell erhöht wird, um die Menge an einzuspritzendem Reduktionsmittel zu verringern.

4. Verfahren zur Steuerung eines Systems (10) zur Behandlung von Abgasen (G) eines Verbrennungsmotors (12) gemäß einem der Ansprüche 1 bis 3, **dadurch gekennzeichnet, dass**, wenn der Verschmutzungsgrad des Partikelfilters (20) einen vorbestimmten zweiten Höchstwert erreicht, während der Wert des Füllungsgrades der Falle (23) für Stickoxide (NOx) niedriger als ein erster Mindestwert ist, die Regenerierung des Partikelfilters (20) zumindest teilweise durchgeführt wird, ohne dass die Regenerierung der Falle (23) für Stickoxide (NOx) durchgeführt wird.
